(19) Europäisches Patentamt
European Patent Office
Office européen des brevets

(11) Numéro de publication: **0 185 589**
**A1**

(12) # DEMANDE DE BREVET EUROPEEN

(21) Numéro de dépôt: 85402449.4

(22) Date de dépôt: 10.12.85

(51) Int. Cl.[4]: C 07 F 9/38
A 61 K 31/66

(30) Priorité: 12.12.84 FR 8418988
12.12.84 FR 8418989

(43) Date de publication de la demande:
25.06.86 Bulletin 86/26

(84) Etats contractants désignés:
AT BE CH DE FR GB IT LI LU NL SE

(71) Demandeur: RHONE-POULENC SANTE
Les Miroirs 18 Avenue d'Alsace
F-92400 Courbevoie Cedex(FR)

(72) Inventeur: Ollivier, Roland
94, rue des Fauvettes
F-45160 Olivet(FR)

(72) Inventeur: Sturtz, Georges
22, boulevard Léon Blum
F-29200 Brest(FR)

(74) Mandataire: Le Goff, Yves et al,
RHONE-POULENC RECHERCHES Brevets Pharma 25,
Quai Paul Doumer
F-92408 Courbevoie(FR)

(54) **Nouveaux dérivés de l'acide méthylène bis-phosphonique, leur préparation et les compositions pharmaceutiques qui les contiennent.**

(57) Nouveaux dérivés de formule (I) dans laquelle: -soit $R_1$ = $C_2H_5$, $C_3H_7$ ou i-$C_3H_7$ et $R_2$ = H -soit $R_1$ = alcoyle (1 à 3 C) et $R_2$ = alcoyle (1 à 12 C) ainsi que leurs sels métalliques et leurs sels d'addition avec les bases azotées.

Ces produits sont utiles dans le traitement de la maladie de Paget.

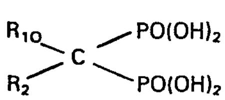

EP 0 185 589 A1

La présente invention concerne de nouveaux dérivés de l'acide méthylène bis-phosphonique utiles comme médicaments, leur préparation et leurs sels pharmaceutiquement acceptables.

Plus précisément, l'invention concerne de nouveaux dérivés de formule générale :

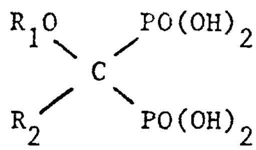

(I)

dans laquelle :

- soit $R_1$ représente un radical éthyle, propyle ou isopropyle et $R_2$ représente un atome d'hydrogène,
- soit $R_1$ représente un radical alcoyle dont la partie alcoyle contient 1 à 3 atomes de carbone en chaîne droite ou ramifiée, et $R_2$ représente un radical alcoyle contenant 1 à 12 atomes de carbone en chaîne droite ou ramifiée.

Selon la présente invention, les produits de formule générale (I) peuvent être préparés par hydrolyse des esters correspondants de formule générale :

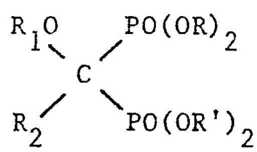

(II)

dans laquelle R et R', identiques ou différents, représentent un radical alcoyle contenant 1 à 4 atomes de carbone en chaîne droite ou ramifiée, de préférence un radical éthyle, et $R_1$ et $R_2$ sont définis comme précédemment.

En général, on opère par toute méthode connue de l'homme du métier pour hydrolyser un ester phosphonique en acide correspondant sans toucher au reste de la molécule. Il est particulièrement avantageux, sans que cela soit indispensable, d'effectuer l'hydrolyse des produits de formule générale (II) après transformation de ceux-ci en tétraesters triméthylsilylés de formule générale :

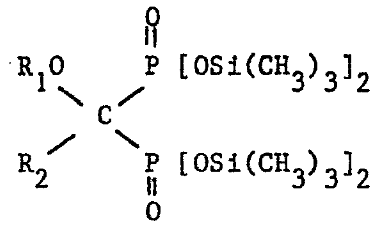

(III)

Dans ce cas, la silylation s'effectue sur les esters de formule générale (II) en employant les moyens habituels connus de l'homme du métier pour transformer un ester alcoylé en ester triméthylsilylé, par exemple par action d'un halogénure de triméthylsilyle, de préférence le bromure, en opérant dans un solvant organique tel qu'un solvant chloré comme le chlorure de méthylène ou le tétrachlorure de carbone, à une température comprise entre 0 et 40°C, de préférence entre 15 et 25°C.

L'hydrolyse de l'ester silylé de formule générale (III) peut être effectuée par toute méthode connue, en particulier par action d'un alcool comme le méthanol, en opérant à une température comprise entre 10 et 30°C.

Les produits de formule générale (II) peuvent être préparés à partir d'un produit de formule générale :

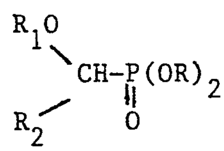

(IV)

dans laquelle R représente un radical alcoyle contenant 1 à 4 atomes de carbone en chaîne droite ou ramifiée et $R_1$ et $R_2$ sont définis comme précédemment par action d'une base organique, de préférence un dérivé organo-lithien, suivie de l'action d'un halogénophosphate de formule générale :

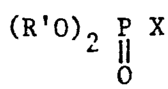

(V)

dans laquelle R' représente un radical alcoyle en chaîne droite ou ramifiée contenant 1 à 4 atomes de carbone et X représente un atome d'halogène, de préférence le chlore.

Comme dérivé organo-lithien, il est particulièrement avantageux d'utiliser un dialcoylamidure de lithium éventuellement préparé in situ à partir de dialcoylamine et de butyllithium, par exemple le diisopropylamidure de lithium, préparé à partir de diisopropylamine et de butyllithium. La réaction s'effectue généralement à une température comprise entre -80 et -40°C.

L'halogénophosphate de formule générale (V) peut être préparé par application ou adaptation de la méthode décrite par H. Mc COMBIE, B.C. SAUNDERS et G.J. STACEY, J. Chem. Soc. (1945), 380.

Les produits de formule générale (IV) peuvent être préparés par action d'un éther halogéné de formule générale :

$$X_1\ \underset{\displaystyle R_2}{\underset{|}{CH}}\ OR_1 \qquad (VI)$$

dans laquelle $X_1$ représente un atome d'halogène, tel que le chlore et $R_1$ et $R_2$ sont définis comme précédemment, sur un phosphite d'alcoyle de formule générale :

$$P(OR)_3 \qquad (VII)$$

dans laquelle R est défini comme précédemment dans la formule (II).

On opère généralement sans solvant, par chauffage à une température comprise entre 80 et 140°C du mélange des produits de formules générales (VI) et (VII) en quantités stoechiométriques ou en présence d'un excès de phosphite de formule générale (VII).

L'éther halogéné de formule générale (VI) peut être préparé par adaptation de la méthode décrite par C.S. MARVEL et P.K. PORTER. Org. Synth. Coll. Vol. 1, p. 377.

Les produits de formule générale (IV) peuvent également être préparés par action d'un phosphite sodé de formule générale :

$$(RO)_2\underset{\displaystyle O}{\underset{\|}{P}} - Na \qquad (VIII)$$

dans laquelle R est défini comme précédemment, sur un produit de formule générale (VI) défini comme précédemment.

On opère généralement dans un solvant éthéré tel que le tétrahydrofuranne ou le dioxanne, à une température comprise entre 0 et 25°C.

Les nouveaux produits de formule (I) ainsi que les intermédiaires de synthèse peuvent être purifiés par les méthodes connues, telles que cristallisation, distillation, chromatographie ou extractions successives en milieu acide et basique le cas échéant.

Parmi les nombreux dérivés de l'acide méthylène bis-phosphonique décrits dans la littérature, très peu d'acides bis-phosphoniques alcoxylés sont cités : l'acide méthoxyméthylène bis-phosphonique est décrit par K.A. PETROV et coll. [J. Gen. Chem. USSR (1980), 1225] mais aucune activité biologique n'est mentionnée; l'acide butoxyméthylène bis-phosphonique est décrit par R. OLLIVIER [Thèse présentée le 14 décembre 1982 à l'Université de Bretagne Occidentale sur le sujet suivant : "Sur différentes voies d'accès aux acides méthylène diphosphoniques diversement substitués"] ; dans cette thèse une évaluation biologique est envisagée, mais aucun résultat n'est divulgué. Enfin, le brevet russe SU-A-772152 décrit des acides méthylène bis-phosphoniques alcoxylés mais qui ne sont pas compris dans la formule générale de la présente invention; de plus, les produits décrits dans ce brevet russe sont utiles comme agents de flottation pour l'enrichissement des minerais et non comme médicament.

Selon l'invention, les produits de formule générale (I) présentent des propriétés pharmacologiques particulièrement intéressantes. Ils se sont en effet montrés actifs dans le test de l'inhibition de la résorption osseuse selon la technique microradiographique décrite par R. SCHENK et coll., Calcif. Tiss. Res. 11, 196 (1973) à des doses comprises entre 0,1 et 5 mg/kg par voie sous-cutanée.

Ils se sont également montrés actifs à des doses comprises entre 0,1 et 10 mg/kg par voie sous-cutanée dans le test de la prévention de l'hypercalcémie induite par un rétinoïde chez le rat thyroparathyroïdectomisé, selon la technique inspirée de T.TSUDZUKI,

V. TRECHSEL et H. FLEISCH, 18ème Symposium Européen sur les Tissus Calcifiés, ANGERS (France), 15 au 18 octobre 1984.

En outre, les produits de formule (I) présentent une toxicité relativement modérée ; ainsi, leur $DL_{50}$ chez la souris est généralement comprise entre 10 et 500 mg/kg par voie intraveineuse.

Pour l'emploi thérapeutique, il peut être fait usage des nouveaux produits de formule générale (I) tel quel ou, de préférence, à l'état de sel pharmaceutiquement acceptable, c'est-à-dire non toxique aux doses d'utilisation.

Comme exemples de sels pharmaceutiquement acceptables peuvent être cités les sels avec les métaux alcalins tels que sel de sodium, de potassium ou de lithium, les sels avec les métaux alcalino-terreux, les sels d'ammonium provenant de bases comme l'ammoniac, la cyclohexylamine, l'éthanolamine ou la lysine.

Ces sels peuvent être préparés selon les méthodes habituelles connues de l'homme du métier pour transformer un acide en sel avec des métaux alcalins ou alcalino-terreux ou en sel avec des bases azotées.

Sont particulièrement intéressants les produits de formule générale (I) dans laquelle $R_1$ représente un radical éthyle ou propyle et $R_2$ représente un atome d'hydrogène ou un radical alcoyle contenant 1 à 7 atomes de carbone en chaîne droite ou ramifiée.

Sont spécialement intéressants les produits de formule générale (I) dans laquelle $R_1$ représente un radical éthyle ou propyle et $R_2$ représente un atome d'hydrogène ou un radical alcoyle contenant 1 à 5 atomes de carbone en chaîne droite.

Sont plus spécialement intéressants, les produits suivants :

- l'acide éthoxyméthylène bis-phosphonique et son sel de sodium,
- l'acide (éthoxy-1 hexylidène-1,1) bis-phosphonique et son sel de sodium,
- l'acide n-propyloxyméthylène bis-phosphonique.

Les exemples suivants, donnés à titre non limitatif, montrent comment l'invention peut être mise en pratique.

EXEMPLE 1

A une solution de 10,7 g d'éthoxyméthylène bis-phosphonate de tétraéthyle dans 40 cm3 de chlorure de méthylène, on ajoute goutte à goutte en 30 minutes 25 g de bromure de triméthylsilyle. La température du mélange réactionnel s'élève de 20°C à 25°C et la solution qui était incolore devient jaune. Le mélange réactionnel est maintenu pendant encore 3 heures sous agitation puis est concentré à sec sous pression réduite (20 mm de mercure; 2,7 kPa) à 40°C. On obtient ainsi l'ester tétratris-méthylsilylé de l'acide éthoxyméthylène bis-phosphonique que l'on hydrolyse par agitation pendant 1 heure avec 30 cm3 de méthanol. Après quoi, le mélange est concentré à sec sous pression réduite (20 mm de mercure; 2,7 kPa) à 40°C. On obtient ainsi 7 g d'acide éthoxyméthylène bis-phosphonique sous forme d'une huile limpide, que l'on identifie sous forme de sel de sodium, préparé de la manière suivante :

7 g d'acide éthoxyméthylène bis-phosphonique préparé comme décrit précédemment sont dissous dans 5 cm3 d'eau distillée et la solution obtenue est amenée à pH 8,7 au moyen de 95,45 cm3 d'une solution aqueuse de soude N en maintenant la température au voisinage de 20°C. Après évaporation de l'eau sous pression réduite [20 mm de mercure (2,7 kPa) puis 0,1 mm de mercure (0,13 kPa)] à 60°C, on obtient 9,1 g de sel trisodique de l'acide éthoxyméthylène bis-phosphonique, sous forme d'une poudre blanche.

Spectre R.M.N. du proton (100 MHz, $D_2O$) :

$\delta$ = 1,21 ppm (triplet; 3H : $-CH_2-C\underline{H}_3$)

$\delta$ = 3,71 à 4,12 ppm (multiplet : 3H : $-C\underline{H}_2-CH_3$ et $-\overset{|}{\underset{|}{P}}-C\underline{H}-\overset{||}{\underset{|}{P}}-$)

Spectre R.M.N. du $^{31}P$ (100 MHz, $D_2O$) :

$\delta$ = 17,408 ppm (singulet).

L'éthoxyméthylène bis-phosphonate de tétraéthyle peut être obtenu de la manière suivante :

A une solution de 20,2 g de diisopropylamine dans 125 cm3 de tétrahydrofuranne anhydre refroidie à -80°C et maintenue sous courant d'azote, on ajoute goutte à goutte 80 cm3 d'une solution 2,5 M de n-butyllithium dans l'hexane et laisse agiter pendant 15 minutes. On obtient ainsi une solution orangée. On ajoute alors en

30 minutes 19,8 g d'éthoxyméthylphosphonate de diéthyle en maintenant le mélange réactionnel à une température voisine de -70°C; la solution prend alors une coloration jaune. A cette solution, on ajoute goutte à goutte en 30 minutes 19 g de chlorophosphate de diéthyle et laisse revenir à une température voisine de 20°C sous agitation pendant une nuit. Le mélange réactionnel est alors hydrolysé par addition de 100 cm3 d'eau et extrait 3 fois par 250 cm3 au total de chlorure de méthylène. Les phases organiques sont réunies et lavées une fois avec 50 cm3 d'eau et séchées sur sulfate de sodium anhydre. La solution est filtrée et le filtrat est concentré sous pression réduite (20 mm de mercure; 2,7 kPa) à 40°C. L'huile obtenue est distillée. On obtient ainsi 19 g d'éthoxyméthylène bis-phosphonate de tétraéthyle bouillant à 122 - 124°C sous 0,05 mm de mercure (0,0067 kPa).

L'éthoxyméthylphosphonate de diéthyle peut être préparé de la manière suivante :

Dans un ballon contenant 536,5 g de phosphite de triéthyle, on ajoute goutte à goutte 306 g d'éther de chlorométhyle et d'éthyle et chauffe le mélange réactionnel à 110 - 115°C pendant 20 heures. Après distillation, on obtient 530 g d'éthoxyméthylphosphonate de diéthyle sous forme d'un liquide incolore bouillant à 86 - 90°C sous 0,05 mm de mercure.

EXEMPLE 2 -

A une solution de 2,7 g d'(éthoxy-1 hexylidène-1,1) bis-phosphonate de tétraéthyle dans 15 cm3 de chlorure de méthylène, on ajoute goutte à goutte en 5 minutes 5,35 g de bromure de triméthylsilyle et laisse agiter la solution pendant une nuit à température ambiante. Le mélange réactionnel est alors concentré à sec sous pression réduite (20 mm de mercure ; 2,7 kPa) à 40°C. On obtient ainsi l'ester tétratris-méthylsilylé de l'acide (éthoxy-1 hexylidène-1,1) bis-phosphonique que l'on hydrolyse par agitation pendant une heure avec 10 cm3 de méthanol. Après quoi, le mélange est concentré à sec sous pression réduite (20 mm de mercure ; 2,7 kPa) à 40°C. On obtient ainsi 1,9 g d'acide (éthoxy-1 hexylidène-1,1) bis-phosphonique sous forme d'une huile limpide, que l'on identifie sous forme de sel de sodium, préparé de la manière suivante :

1,9 g d'acide (éthoxy-1 hexylidène-1,1) bis-phosphonique préparé comme décrit précédemment sont dissous dans 2 cm3 d'eau distillée et la solution obtenue est amenée à pH 8,7 au moyen de 19,65 cm3 d'une solution aqueuse de soude N en maintenant la température au voisinage de 20°C. Après évaporation de l'eau sous pression réduite [20 mm de mercure (2,7 kPa) puis 0,1 mm de mercure (0,13 kPa)] à 60°C, on obtient 2,33 g de sel trisodique de l'acide éthoxy-1 hexylidène-1,1) bis-phosphonique, sous forme d'une poudre blanche.

Spectre RMN du proton (100 MHz, $D_2O$) :

δ = 0,73 à 0,93 ppm [triplet, 3H : $-(CH_2)_4C\underline{H}_3$]

δ = 1,13 ppm [triplet, 3H : $-OCH_2C\underline{H}_3$, J = 6,6 Hz]

δ = 1,23 à 2,13 ppm [massif, 8H : $-(C\underline{H}_2)_4CH_3$]

δ = 3,7 à 4 ppm [quadruplet, 2H : $-OC\underline{H}_2CH_3$, J = 6,6 Hz]

L'(éthoxy-1 hexylidène-1,1) bis-phosphonate de tétraéthyle peut être obtenu de la manière suivante :

A une solution de 4,14 g de diisopropylamine dans 40 cm3 de tétrahydrofuranne anhydre refroidie à -70°C et maintenue sous courant d'azote, on ajoute goutte à goutte en 15 minutes 22 cm3 d'une solution 2M de n-butyllithium dans l'hexane et laisse agiter pendant 15 minutes. On obtient ainsi une solution orangée. On ajoute alors en 30 minutes 11 g d'(éthoxy-1 hexyl) phosphonate de diéthyle, en maintenant le mélange réactionnel à une température voisine de -70°C. La solution prend alors la coloration jaune. A cette solution, on ajoute alors goutte à goutte 7,07 g de chlorophosphate de diéthyle et laisse revenir à une température voisine de 20°C sous agitation pendant une nuit. Le mélange réactionnel est hydrolysé par addition de 30 cm3 d'eau glacée et le mélange est extrait 3 fois par 200 cm3 au total d'éther diéthylique. Les phases organiques sont réunies et lavées avec 200 cm3 d'eau distillée et séchées sur sulfate de sodium anhydre. La solution est filtrée et le filtrat est concentré à sec sous pression réduite (20 mm de mercure ; 2,7 kPa) à 40°C. L'huile obtenue est distillée. On obtient ainsi 6 g d'(éthoxy-1 hexylidène-1,1) bis-phosphonate de tétraéthyle bouillant à 126-128°C sous 0,01 mm de mercure (0,0013 kPa).

L'(éthoxy-1 hexyl) phosphonate de diéthyle peut être obtenu de la manière suivante :

Dans un ballon contenant 33 g de phosphite de triéthyle, on ajoute goutte à goutte 22,3 g d'éther de (chloro-1 hexyle) et d'éthyle et chauffe le mélange réactionnel à 120°C pendant 16 heures. Après distillation, on obtient 11 g d'(éthoxy-1 hexyl) phosphonate de diéthyle bouillant à 96-98°C sous 0,2 mm de mercure (0,027 kPa).

L'éther de (chloro-1 hexyle) et d'éthyle peut être préparé de la manière suivante :

Une solution de 30 g d'hexanal dans 14,1 g d'éthanol anhydre est refroidie à une température comprise entre -10 et 0°C. Dans cette solution, on fait passer un courant d'acide chlorhydrique gazeux correspondant à 11 g puis laisse agiter pendant 5 minutes. Le mélange réactionnel est décanté, la couche organique est séchée sur chlorure de calcium puis filtrée. Le filtrat est distillé. On obtient ainsi 22,3 g d'éther de (chloro-1 hexyle) et d'éthyle bouillant à 82-86°C sous 30 mm de mercure (4 kPa).

EXEMPLE 3

A une solution de 12,0 g de propyloxyméthylène bis-phosphonate de tétraéthyle dans 30 cm3 de chlorure de méthylène, on ajoute goutte à goutte en 30 minutes 26,7 g de bromure de triméthylsilyle. La température du mélange réactionnel s'élève de 20 à 25°C et la solution se colore légèrement en jaune. Le mélange réactionnel est maintenu pendant encore 3 heures sous agitation puis est concentré à sec sous pression réduite (20 mm Hg; 2,7 kPa) à 40°C. On obtient ainsi l'ester tétratrisméthylsilylé de l'acide propyloxyméthylène bisphosphonique que l'on hydrolyse par agitation pendant 1 heure avec 30 cm3 de méthanol. Après quoi, le mélange est concentré à sec sous pression réduite (20 mm de mercure; 2,7 kPa) à 40°C. On obtient ainsi l'acide propyloxyméthylène bis-phosphonique sous forme d'huile légèrement colorée en jaune brun que l'on identifie sous forme de sel de sodium préparé de la manière suivante:

L'acide, préparé comme décrit précédemment, est repris par 20 cm3 d'eau distillée et la solution obtenue est amenée à pH 8,6 au moyen d'une solution aqueuse de soude environ 1N en maintenant la température au voisinage de 20°C. Après évaporation de l'eau sous pression réduite [20 mmHg (2,7 kPa) à 40°C puis sous 0,1 mm de mercure (0,013 kPa) à 60°C] on obtient 12,3 g de sel trisodique de l'acide propyloxyméthylène bis-phosphonique, sous forme d'une poudre blanche.

Spectre R.M.N. du proton (100 MHz, $D_2O$) :

δ = 0,9 ppm (triplet; 3H : $-CH_2$ $CH_2$-$C\underline{H}_3$)

δ = 1,6 ppm (multiplet; 2H : $-CH_2-C\underline{H}_2-CH_3$)

δ = 3,7 ppm (triplet; 2H : $-C\underline{H}_2-CH_2-CH_3$)

δ = 3,4 ppm (triplet; 1H : - $C_3H_7O$ - $C\underline{H}<$)

Spectre R.M.N. du $^{31}P$ (100 MHz, $D_2O$) :

δ = 17,75 ppm (singulet).

Le propyloxyméthylène bis-phosphonate de tétraéthyle peut être obtenu de la manière suivante :

A une solution de 9,7 g de diisopropylamine dans 60 cm3 de tétrahydrofuranne anhydre refroidie à -70°C et maintenue sous courant d'azote, on ajoute goutte à goutte en 30 minutes 40 cm3 d'une solution 2,4 M de n-butyllithium dans l'hexane. On laisse agiter pendant 15 minutes à cette température. On obtient ainsi une solution orangée. On ajoute alors en 30 mintues 10 g de propyloxyméthylphosphonate de diéthyle en maintenant le mélange réactionnel à une température voisine de -70°C et laisse agiter à cette température pendant 30 minutes.

On ajoute alors en 15 minutes 8,25 g de chlorophosphate de diéthyle et on laisse revenir à température ambiante. Après hydrolyse et extraction au chlorure de méthylène, la phase organique est séchée sur sulfate de magnésium anhydre. La solution est filtrée et le filtrat est concentrée à sec sous pression réduite (20 mm de marcure; 2,7 kPa) à 40°C. L'huile obtenue est distillée. On obtient ainsi 12 g de propyloxyméthylène bis-phosphonate de tétraéthyle bouillant à 128-130°C sous 0,01 mm de mercure (0,0013 kPa).

0185589

Le propyloxyméthylphosphonate de diéthyle peut être obtenu comme décrit à l'exemple 2 pour la préparation de l'(éthoxy-1 hexyl) phosphonate de diéthyle mais à partir d'éther de chlorométhyle et de propyle. On obtient ainsi le propyloxyméthylphosphonate de diéthyle sous forme d'une huile bouillant à 72-73°C sous 0,1 mm de mercure (0,013 kPa).

L'éther de chlorométhyle et de propyle peut être préparé comme décrit à l'exemple 2 pour la préparation de l'éther de (chloro-1 hexyle) et d'éthyle mais à partir des quantités correspondantes de méthanal, de propanol et d'acide chlorhydrique gazeux. On obtient ainsi l'éther de (chlorométhyle) et d'éthyle, sous forme d'huile employée à l'état brut dans la suite de la synthèse.

EXEMPLE 4

En opérant comme décrit à l'exemple 3 mais à partir d'isopropyloxyméthylène bis-phosphonate de tétraéthyle, on obtient le sel trisodique de l'acide isopropyloxyméthylène bis-phosphonique, sous forme d'une poudre blanche.

Spectre R.M.N. du proton (100 MHz, $D_2O$) :

δ = 1,2 ppm (doublet; 6H : $(C\underline{H}_3)_2$ CH-)

δ = 3,75 ppm (triplet; 1H : i-$C_3H_7$O-C$\underline{H}$< )

δ = 4,1 ppm (multiplet; 1H : $(CH_3)_2$ C$\underline{H}$-)

Spectre R.M.N. de $^{31}P$ (100 MHz; $D_2O$) :

δ = 17,45 ppm (singulet).

L'isopropyloxyméthylène bis-phosphonate de tétraéthyle peut être préparé comme décrit à l'exemple 3 pour la préparation du propyloxyméthylène bis-phosphonate de tétraéthyle mais à partir d'isopropyloxyméthylphosphonate de diéthyle. On obtient ainsi l'isopropyloxyméthylène bis-phosphonate de tétraéthyle sous forme d'une huile bouillant à 135-136°C sous 0,15 mm de mercure (0,02 kPa).

L'isopropyloxyméthylphosphonate de diéthyle peut être préparé comme décrit à l'exemple 2 pour la préparation de l'(éthoxy-1 hexyl) phosphonate de diéthyle mais à partir de l'éther de chlorométhyle et d'isopropyle. On obtient ainsi l'isopropyloxyméthylphosphonate de diéthyle sous forme d'une huile bouillant à 75°C sous 0,15 mm de mercure (0,02 kPa).

L'éther de chlorométhyle et d'isopropyle peut être préparé comme décrit à l'exemple 2 pour la préparation de l'éther de (chloro-1 hexyle) et d'éthyle, mais à partir des quantités correspondantes de méthanal, d'isopropanol et d'acide chlorhydrique gazeux. On obtient ainsi l'éther de chlorométhyle et d'isopropyle, sous forme d'huile employée à l'état brut dans la suite de la synthèse.

EXEMPLE 5

En opérant comme décrit à l'exemple 3 mais à partir de (méthoxy-1 éthylidène-1,1) bis-phosphonate de tétraéthyle, on obtient le sel trisodique de l'acide (méthoxy-1 éthylidène-1,1) bis-phosphonique, sous forme d'une poudre blanche.

Spectre R.M.N. du proton (100 MHz, $D_2O$) :

$\delta$ = 1,6 ppm (triplet; 3H : $CH_3$-O-)

$\delta$ = 3,6 ppm (singulet; 3H : $CH_3O-\underset{\underset{CH_3}{|}}{C}<$)

Spectre R.M.N. du $^{31}P$ (100 MHz, $D_2O$)

$\delta$ = 20,8 ppm (singulet).

Le (méthoxy-1 éthylidène-1,1) bis-phosphonate de tétraéthyle peut être préparé comme décrit à l'exemple 3 pour la préparation du propyloxyméthylène bis-phosphonate de tétraéthyle mais à partir de (méthoxy-1 éthyl) phosphonate de diéthyle. On obtient ainsi le (méthoxy-1 éthylidène-1,1) bis-phosphonate de tétraéthyle sous forme d'une huile bouillant à 122-123°C sous 0,1 mm de mercure (0,013 kPa).

Le (méthoxy-1 éthyl) phosphonate de diéthyle peut être préparé comme décrit à l'exemple 2 pour la préparation de l'(éthoxy-1 hexyl) phosphonate de diéthyle mais à partir de l'éther de (chloro-1 éthyle) et de méthyle. On obtient ainsi le (méthoxy-1 éthyl) phosphonate de diéthyle sous forme d'une huile bouillant à 60°C sous 0,1 mm de mercure (0,013 kPa).

L'éther de (chloro-1 éthyle) et de méthyle peut être obtenu comme décrit à l'exemple 2 pour la préparation de l'éther de (chloro-1 hexyle) et d'éthyle, mais à partir des quantités correspondantes d'éthanal, de méthanol et d'acide chlorhydrique gazeux. On obtient ainsi l'éther de (chloro-1 éthyle) et de méthyle, sous forme d'huile employée à l'état brut dans la suite de la synthèse.

EXEMPLE 6

En opérant comme décrit à l'exemple 3 mais à partir de (méthoxy-1 hexylidène-1,1) bis-phosphonate de tétraéthyle, on obtient le sel trisodique de l'acide (méthoxy-1 hexylidène-1,1) bis-phosphonique sous forme d'une poudre blanche.

Spectre R.M.N. du proton (100 MHz, $D_2O$) :

$\delta$ = 0,6-2,3 ppm (massif; 11H : $C_5\underline{H}_{11} - \overset{|}{\underset{|}{C}} -$)

$\delta$ = 3,6 ppm (singulet; 3H : $C\underline{H}_3O - \overset{|}{\underset{|}{C}} -$ )

Spectre R.M.N. du $^{31}P$ (100 MHz, $D_2O$)
$\delta$ = 20 ppm (singulet).

Le (méthoxy-1 hexylidène-1,1) bis-phosphonate de tétraéthyle peut être obtenu comme décrit à l'exemple 2 pour la préparation de l'(éthoxy-1 hexylidène-1,1) bis-phosphonate de tétraéthyle mais à partir de (méthoxy-1 hexyl) phosphonate de diéthyle. On obtient ainsi le (méthoxy-1 hexylidène-1,1) bis-phosphonate de tétraéthyle sous forme d'une huile bouillant à 134°C sous 0,1 mm de mercure (0,013 kPa).

Le (méthoxy-1 hexyl) phosphonate de diéthyle peut être préparé comme décrit à l'exemple 2 pour la préparation de (l'éthoxy-1 hexyl) phosphonate de diéthyle mais à partir de l'éther de (chloro-1 hexyle) et de méthyle. On obtient ainsi le (méthoxy-1 hexyl) phosphonate de diéthyle sous forme d'une huile bouillant à 103-105°C sous 0,15 mm de mercure (0,02 kPa).

L'éther de (chloro-1 hexyle) et de méthyle peut être préparé comme décrit à l'exemple 2 pour la préparation de l'éther de (chloro-1 hexyle) et d'éthyle, mais à partir des quantités correspondantes d'hexanal, de méthanol et d'acide chlorhydrique gazeux. On obtient ainsi l'éther de (chloro-1 hexyle) et de méthyle, sous forme d'une huile employée à l'état brut dans la suite de la synthèse.

EXEMPLE 7

En opérant comme décrit à l'exemple 3 mais à partir d'(éthoxy-1 éthylidène-1,1) bis-phosphonate de tétraéthyle, on obtient le sel trisodique de l'acide (éthoxy-1 éthylidène-1,1) bis-phosphonique, sous forme d'une poudre blanche.

Spectre R.M.N. du proton (100 MHz, $D_2O$) :

δ = 1,2 ppm (triplet; 3H : $C\underline{H}_3 - CH_2 - O -$)

δ =1,6 ppm (triplet; 3H : $C_2H_5O - \overset{|}{\underset{|}{C}} - C\underline{H}_3$)

δ = 3,9 ppm (quadriplet; 2H : $CH_3-C\underline{H}_2 - O -$)

Spectre R.M.N. du $^{31}P$ (100 MHz, $D_2O$) :

δ = 20,9 ppm (singulet)

L'(éthoxy-1 éthylidène-1,1) bis-phosphonate de tétraéthyle peut être préparé comme décrit à l'exemple 2 pour la préparation de l'(éthoxy-1 hexylidène-1,1) bis-phosphonate de tétraéthyle mais à partir d'(éthoxy-1 éthyl) phosphonate de diéthyle, sous forme d'une huile bouillant à 111-112°C sous 0,05 mm de mercure (0,0067 kPa).

L'(éthoxy-1 éthyl) phosphonate de diéthyle peut être préparé comme décrit à l'exemple 2 pour la préparation de l'(éthoxy-1 hexyl) phosphonate de diéthyle mais à partir de l'éther de (chloro-1 éthyle) et d'éthyle. On obtient ainsi l'(éthoxy-1 éthyl) phosphonate de diéthyle sous forme d'une huile bouillant à 66-67°C sous 0,1 mm de mercure (0,013 kPa).

L'éther de (chloro-1 éthyle) et d'éthyle peut être préparé comme décrit à l'exemple 2 pour la préparation de l'éther de (chloro-1 hexyle) et d'éthyle, mais à partir des quantités correspondantes d'éthanal, d'éthanol et d'acide chlorhydrique gazeux. On obtient ainsi l'éther de (chloro-1 éthyle) et d'éthyle, sous forme d'une huile employée à l'état brut dans la suite de la synthèse.

EXEMPLE 8

En opérant comme décrit à l'exemple 3, mais à partir d'(éthoxy-1 octylidène-1,1) bis-phosphonate de tétraéthyle, on obtient le sel trisodique de l'acide (éthoxy-1 octylidène-1,1) bis-phosphonique, sous forme d'une poudre blanche.

Spectre R.M.N. du proton (100 MHz, $D_2O$) :

$\delta$ = 0,6-2 ppm (massif; 18H : $C_7\underline{H}_{15} - \overset{|}{\underset{|}{C}} - O - CH_2 - C\underline{H}_3$)

$\delta$ = 3,9 ppm (quadruplet; 2H : $CH_3 - C\underline{H}_2O-$)

Spectre R.M.N de $^{31}P$ (100 MHz, $D_2O$) :

$\delta$ = 20,3 ppm (singulet).

L'(éthoxy-1 octylidène-1,1) bis-phosphonate de tétraéthyle peut être préparé comme décrit à l'exemple 2 pour la préparation de l'(éthoxy-1 hexylidène-1,1) bis-phosphonate de tétraéthyle, mais à partir d'(éthoxy-1 octyl) phosphonate de diéthyle. On obtient ainsi l'(éthoxy-1 octylidène-1,1) bis-phosphonate de tétraéthyle sous forme d'une huile employée sous forme brute dans la suite de la synthèse.

L'(éthoxy-1 octyl) phosphonate de diéthyle peut être préparé comme décrit à l'exemple 2 pour la préparation de l'(éthoxy-1 hexyl) phosphonate de diéthyle, mais à partir d'oxyde de (chloro-1 octyle) et d'éthyle. On obtient ainsi l'(éthoxy-1 octyl) phosphonate de diéthyle sous forme d'une huile bouillant à 110-111°C sous 0,1 mm de mercure (0,013 kPa).

L'éther de (chloro-1 octyle) et d'éthyle peut être obtenu comme décrit à l'exemple 2 pour la préparation de l'éther de (chloro-1 hexyle) et d'éthyle, mais à partir des quantités correspondantes d'octanal, d'éthanol et d'acide chlorhydrique gazeux. On obtient ainsi l'éther de (chloro-1 octyle) et d'éthyle, sous forme d'une huile employée à l'état brut dans la suite de la synthèse.

La présente invention concerne également les médicaments constitués par un produit de formule générale (I), sous forme libre ou sous forme de sel métallique ou de sel avec une base azotée pharmaceutiquement acceptable, à l'état pur ou sous forme d'une composition dans laquelle il est associé à tout autre produit pharmaceutiquement compatible, pouvant être inerte ou physiologiquement actif. Les médicaments selon l'invention peuvent être utilisés par voie orale, parentérale, rectale ou topique.

Comme compositions solides pour administration orale peuvent être utilisés des comprimés, pilules, poudres (notamment dans des capsules de gélatine ou des cachets) ou granulés. Dans ces compositions, le produit actif selon l'invention est mélangé à un ou plusieurs diluants inertes, tels que amidon, cellulose, saccharose, lactose ou silice. Ces compositions peuvent également comprendre des substances autres que les diluants, par exemple un ou plusieurs lubrifiants tel que le stéarate de magnésium ou le talc, un colorant, un enrobage (dragées) ou un vernis.

Comme compositions liquides pour administration orale, on peut utiliser des solutions, des suspensions, des émulsions, des sirops et des élixirs pharmaceutiquement acceptables contenant des diluants inertes tels que l'eau, l'éthanol, le glycérol, les huiles végétales ou l'huile de paraffine. Ces compositions peuvent également comprendre des substances autres que les diluants, par exemple des produits mouillants, édulcorants, épaississants, aromatisants ou stabilisants.

Les compositions stériles pour administration parentérale peuvent être de préférence des solutions aqueuses ou non aqueuses, des suspensions ou des émulsions. Comme solvant ou véhicule, on peut employer l'eau, le propylèneglycol, un polyéthylèneglycol, des

huiles végétales, en particulier l'huile d'olive, des esters organiques injectables, par exemple l'oléate d'éthyle ou autres solvants organiques convenables. Ces compositions peuvent également contenir des adjuvants, en particulier des agents mouillants, isotonisants, émulsifiants, dispersants et stabilisants. La stérilisation peut se faire de plusieurs façons, par exemple par filtration aseptisante, en incorporant à la composition des agents stérilisants, par irradiation ou par chauffage. Elles peuvent également être préparées sous forme de compositions solides stériles qui peuvent être dissoutes au moment de l'emploi dans un milieu stérile injectable.

Les compositions pour administration rectale sont les suppositoires ou les capsules rectales, qui contiennent outre le produit actif des excipients tels que le beurre de cacao, des glycérides semi-synthétiques ou des polyéthylèneglycols.

Les compositions pour administration topique peuvent être par exemple des crèmes, pommades ou lotions.

En thérapeutique humaine, les produits selon l'invention sont particulièrement utiles dans le traitement des affections liées au métabolisme du calcium telles que la maladie de Paget ou l'ostéoporose. Les doses dépendent de l'effet recherché et de la durée du traitement ; elles sont généralement comprises entre 10 et 500 mg par jour par voie orale pour un adulte en une ou plusieurs prises.

D'une façon générale, le médecin déterminera la posologie qu'il estime la plus appropriée en fonction de l'âge, du poids, et de tous les autres facteurs propres au sujet à traiter.

Les exemples suivants, donnés à titre non limitatif, illustrent des compositions selon l'invention.

EXEMPLE A

On prépare, selon la technique habituelle, des comprimés dosés à 100 mg de produit actif ayant la composition suivante :

- (éthoxyméthylène) bis-phosphonate de sodium
  (sel trisodique) .................. 130 mg
- amidon .................. 60 mg
- lactose .................. 50 mg
- stéarate de magnésium .................. 2 mg

EXEMPLE B

On prépare une solution injectable contenant 10 mg de produit actif ayant la composition suivante :

- (éthoxyméthylène) bis-phosphonate de sodium
  (sel trisodique) ................ 13 mg
- soluté injectable q.s.p. ................ 2 cm3

EXEMPLE C

On prépare, selon la technique habituelle, des comprimés dosés à 100 mg de produit actif ayant la composition suivante :

- (éthoxy-1 hexylidène-1,1) bis-phosphonate de sodium
  (sel trisodique) ................. 123 mg
- amidon ................. 60 mg
- lactose ................. 50 mg
- stéarate de magnésium ................. 2 mg

EXEMPLE D

On prépare une solution injectable contenant 10 mg de produit actif ayant la composition suivante :

- (éthoxy-1 hexylidène-1,1) bis-phosphonate de sodium
  (sel trisodique) ................. 12,3 mg
- soluté injectable q.s.p. ................. 2 cm3

REVENDICATIONS

1 - Nouveau dérivé de l'acide méthylène bis-phosphonique, caractérisé en ce qu'il répond à la formule générale :

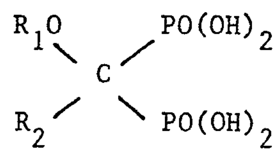

(I)

dans laquelle

- soit $R_1$ représente un radical éthyle, propyle ou isopropyle et $R_2$ représente un atome d'hydrogène,
- soit $R_1$ représente un radical alcoyle dont la partie alcoyle contient 1 à 3 atomes de carbone en chaîne droite ou ramifiée et $R_2$ représente un radical alcoyle contenant 1 à 12 atomes de carbone en chaîne droite ou ramifiée, ainsi que ses sels avec les métaux ou avec les bases azotées.

2 - Procédé de préparation d'un composé selon la revendication 1, caractérisé en ce que l'on hydrolyse un ester de formule générale :

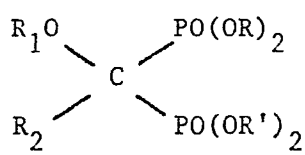

(II)

dans laquelle R et R', identiques ou différents, représentent un radical alcoyle contenant 1 à 4 atomes de carbone en chaîne droite ou ramifiée, puis isole le produit obtenu et le transforme éventuellement en un sel métallique ou en un sel d'addition avec une base azotée.

3 - Procédé de préparation selon la revendication 2, caractérisé en ce que l'hydrolyse s'effectue après transformation du tétraester de formule générale (II) en tétraester triméthylsilylé correspondant.

4 - Composition pharmaceutique, caractérisée en ce qu'elle contient comme ingrédient actif, au moins un produit selon la revendication 1 ou un de ses sels, en association avec un adjuvant ou un enrobage pharmaceutiquement acceptable.

REVENDICATIONS SPECIALES AUTRICHE



## REVENDICATIONS

1 - Procédé de préparation d'un nouveau dérivé de l'acide méthylène bis-phosphonique de formule générale :

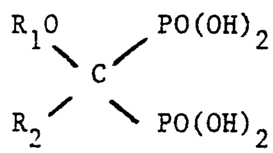

(I)

dans laquelle
- soit $R_1$ représente un radical éthyle, propyle ou isopropyle et $R_2$ représente un atome d'hydrogène,
- soit $R_1$ représente un radical alcoyle dont la partie alcoyle contient 1 à 3 atomes de carbone en chaîne droite ou ramifiée et $R_2$ représente un radical alcoyle contenant 1 à 12 atomes de carbone en chaîne droite ou ramifiée, ainsi que ses sels avec les métaux ou avec les bases azotées, caractérisé en ce que l'on hydrolyse un ester de formule générale :

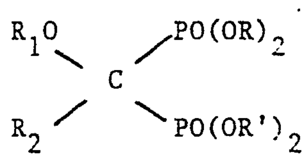

(II)

dans laquelle R et R', identiques ou différents, représentent un radical alcoyle contenant 1 à 4 atomes de carbone en chaîne droite ou ramifiée, puis isole le produit obtenu et le transforme éventuellement en un sel métallique ou en un sel d'addition avec une base azotée.

2 - Procédé de préparation selon la revendication 1, caractérisé en ce que l'hydrolyse s'effectue après transformation du tétraester de formule générale (II) en tétraester triméthylsilylé correspondant.

Office européen des brevets

**RAPPORT DE RECHERCHE EUROPEENNE**

**0185589**

Numero de la demande

EP 85 40 2449

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | CHEMICAL ABSTRACTS, vol. 77, no. 13, 25 septembre 1972, page 23, réf. no. 83538v, Columbus, Ohio, US; W.R. MICHAEL et al.: "Effectiveness of diphosphonates in preventing osteoporosis of disuse in the rat" & CLIN. ORTHOP. RELAT. RES. 1971, No. 78, 271-6<br>* Résumé *<br>--- | 1,4 | C 07 F 9/38<br>A 61 K 31/66 |
| D,A | JOURNAL OF GENERAL CHEMISTRY OF THE USSR, A translation of Zhurnal Obshchei Khimii, 20 décembre 1980, vol. 50, no. 7, partie 1, juillet 1980, pages 1225-1226, Plenum Publishing Corp.; K.A. PETROV et al.: "(Methoxymethylene)bisphosphonic esters"<br>* Page 1226, avant dernier paragraphe *<br>--- | 1 | |
| | | | DOMAINES TECHNIQUES RECHERCHES (Int Cl 4) |
| D,A | SU-A- 772 152 (TIN IND. RES. INST.)<br>* En entier *<br>--- -/- | 1 | C 07 F 9/00 |

Le present rapport de recherche a ete etabli pour toutes les revendications

| Lieu de la recherche | Date d'achèvement de la recherche | Examinateur |
|---|---|---|
| LA HAYE | 25-02-1986 | BESLIER L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

Office européen des brevets

**0185589**

Numero de la demande

# RAPPORT DE RECHERCHE EUROPEENNE

EP 85 40 2449



## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl.4) |
|---|---|---|---|
| A | JOURNAL OF GENERAL CHEMISTRY OF THE USSR. A translation of Zhurnal Obshchei Khimii, 10 mai 1985, vol. 54, no. 11, partie 2, novembre 1984, pages 2237-2249, Plenum Publishing Corp.; M.V. LIVANTSOV et al.: "Synthesis and some properties of phosphorylated formals" * Page 2240, paragraphe 1; page 2246, 'Tetraethyl (Ethoxymethylene)bisphosphonate (IVa)' * | 1 | |
| | ----- | | |

DOMAINES TECHNIQUES RECHERCHES (Int. Cl 4)

Le présent rapport de recherche a été etabli pour toutes les revendications

| Lieu de la recherche | Date d'achèvement de la recherche | Examinateur |
|---|---|---|
| LA HAYE | 25-02-1986 | BESLIER L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82